# EUROPÄISCHE PATENTSCHRIFT

(11) **EP 3 585 994 B1**
(45) Veröffentlichungstag und Bekanntmachung des Hinweises auf die Patenterteilung: **06.04.2022**
(21) Anmeldenummer: 18708079.1
(22) Anmeldetag: 22.02.2018
(51) Int. Cl.: F02K 1/06, F02K 1/08, F02K 1/48, F02K 1/09

(54) **STRAHLTRIEBWERK MIT EINER RADIAL VARIABLEN WANDUNG**
JET ENGINE WITH A RADIALLY VARIABLE WALL
MOTEUR À RÉACTION COMPRENANT UNE CLOISON RADIALEMENT VARIABLE

(30) Priorität: 27.02.2017 DE 102017104078
(43) Veröffentlichungstag der Anmeldung: 01.01.2020
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Müller, Wolfram Hubertus
(86) Internationale Anmeldenummer: PCT/EP2018/054421
(87) Internationale Veröffentlichungsnummer: WO 2018/154005

(56) Entgegenhaltungen:
- WO-A1-2006/055217
- DE-A1-102010 014 909
- DE-A1-102015 206 095

## Beschreibung

Die Erfindung betrifft ein Strahltriebwerk mit einem in einer Triebwerksgondel angeordneten Strömungskanal gemäß der im Oberbegriff des Patentanspruchs 1 näher definierten Art.

Aus der Praxis sind vielfältige Ausführungen von Strahltriebwerken mit Düsen bekannt, bei denen ein Strömungsquerschnitt im Bereich der Düse variierbar ist. Insbesondere bei einer Überschalldüse ist ein Strömungsquerschnitt im Bereich der Düse in zwei Strömungsquerschnitten zu variieren, um den Querschnitt eines Strömungskanals an den jeweiligen Betriebszustand anzupassen. Zur Variation des Strömungsquerschnitts im Bereich der Düse ist es bekannt, eine Wandung der Überschalldüse in Umfangsrichtung mit vielen Einzelteilen auszuführen, die mittels eines Mechanismus zueinander verlagerbar sind.

Derartige Wandungen und Mechanismen sind nachteilhafterweise schwer und komplex ausgeführt. Zudem liegen zwischen den Einzelteilen der Wandung in bestimmten Betriebszuständen Stufen und Spalte vor, die nachteilhafterweise zu signifikanten Wirkungsgradverlusten dieser Systeme führen.

Aus der DE 10 2015 206 095 A1 ist eine Fluggasturbine mit einer variablen Nebenstromdüse bekannt, mittels der ein mit einer derartigen Fluggasturbine ausgeführtes Flugzeug in sämtlichen Flugphasen möglichst effizient betreibbar ist. Bei der Fluggastrubine ist eine radial innere Wandung der Nebenstromdüse hierzu mit einem sogenannten Verstellelement ausgeführt, das in Umfangsrichtung alternierend konvexe und konkave Bereiche aufweist, so dass sich in einer Radialschnittebene eine Wellenstruktur ergibt. Das Verstellelement ist elastisch und radial nach außen verformbar. Zur Verformung des Verstellelements ist eine KolbenZylindereinheit vorgesehen, das mit einem Zuganker an einem Ringelement des Verstellelements angreift. Durch eine Verlagerung des Zugankers ist eine Formgebung des Verstellelements veränderbar, wobei hiermit auch eine Querschnittsänderung der Nebenstromdüse einhergeht.

Mit dieser bekannten Düsengestaltung ist eine definierte variable Formgebung der Nebenstromdüse allerdings nur in begrenztem Umfang vornehmbar.

Aus der WO 2006/055217 A1 ist ein Gasturbinentriebwerk bekannt, das eine Nebenstromdüse aufweist, die an ihrer Austrittskante sägezahnförmige Vorsprünge, sogenannte Chevrons ausbildet. Die Chevrons können abhängig von der Temperatur über Spannglieder aus einer Formgedächtnislegierung in Richtung eines Primärstromkanals gebogen werden oder gerade verbleiben.

Der vorliegenden Erfindung liegt die Aufgabe zugrunde, ein Strahltriebwerk, insbesondere ein Überschalltriebwerk, mit einem variierbaren Strömungskanal zur Verfügung zu stellen, bei dem ein hoher Wirkungsgrad erzielt wird und bei dem ein Strömungsquerschnitt des Strömungskanals möglichst definiert einstellbar ist.

Erfindungsgemäß wird diese Aufgabe mit einem Strahltriebwerk mit den Merkmalen des Patentanspruchs 1 gelöst.

Es wird ein Strahltriebwerk mit einem in einer Triebwerksgondel angeordneten Strömungskanal vorgeschlagen, welcher radial innen von einem Mittelkörper und radial außen von einer äu ßeren Düsenwand begrenzt ist, wobei der freie Querschnitt des Strömungskanals durch eine elastisch ausgeführte, radial variable Wandung wenigstens eines dieser Bauteile veränderbar ist, und wobei die radial variable Wandung zumindest bereichsweise eine wenigstens annähernd wellenartige Struktur mit in Umfangsrichtung alternierend zueinander angeordneten konvexen Bereichen und konkaven Bereiche aufweist, wobei die konvexen Bereiche und die konkaven Bereiche in einer Radialschnittebene sinusförmig ausgebildet sind, und mit wenigstens einer eine Verstelleinheit aufweisenden Versteileinrichtung verbunden ist.

Erfindungsgemäß ist die variable Wandung eines dieser Bauteile an zwei definierten Wandungsabschnitten (auch als Kontrollquerschnitte bezeichnet), von denen wenigstens einer ein axiales Wandungsende der radial variablen Wandung definiert, in radialer Richtung veränderbar. Dazu ist eine Verbindungsstruktur zur Verbindung der wenigstens einen Verstelleinheit mit der variablen Wandung vorgesehen, wobei die Verbindungsstruktur eine Vielzahl von umfangsseitig verteilt angeordneten Stangenelementen aufweist, die jeweils fest mit einem der konkaven Bereich der Wandung verbunden sind.

Bei dem erfindungsgemäßen Strahltriebwerk ist ein Strömungsquerschnitt des Strömungskanals durch die Variabilität im Bereich der Kontrollquerschnitte in vorteilhafter Weise definiert einstellbar, da es sich in Versuchen gezeigt hat, dass ein Kontrollquerschnitt an einem Wandungsende bzw. Strömungskanalende und ein weiterer Kontrollquerschnitt über die Längserstreckung der Düse, beispielsweise im so genannten Throat-Bereich mit geringstem durchströmten Querschnitt, eine zuverlässige Einstellung eines gewünschten Strömungsquerschnitts erlauben.

Durch die in radialer Richtung variable Wandung an zwei signifikanten, vordefinierten Kontrollquerschnitten kann der Querschnittsverlauf in Längsrichtung der Düse auf einfache Weise den jeweiligen Betriebszuständen entsprechend angepasst werden, wobei insbesondere bei Überschalltriebwerken eine erhebliche Effektivitätsverbesserung erzielbar ist.

Durch das Vorsehen der wellenartigen Struktur der flexiblen Wandung ist die Wandung weiterhin vorteilhaft leicht und kostengünstig ausführbar. Zudem weist die Wandung keine Stufen oder Spalte auf, die zu Verwirbelungen und dergleichen und mithin unerwünschten Wirkungsgradverlusten führen könnten.

In nichtbetätigten und daher nichtgedehnten Ausgangszustand der variablen Wandung weist die Wandung insbesondere eine wellblechartige oder wellenförmige Außenkontur auf. Eine Betätigung der variablen Wandung durch die Verstelleinrichtung führt zu einer insbesondere achssymmetrischen und vorteilhaft gleichmäßigen Verformung bzw. zu einem Ausbauchen der variablen Wandung mit einer Reduzierung einer Höhe der Wellenstruktur, wodurch die Wellenstruktur eine kreisförmigere Form annimmt. Ein Durchmesser bzw. eine Querschnittsfläche der variablen Wandung wird hierbei vergrößert, wobei auch bei einer Veränderung der Form der Wandung keine Stufen oder Spalte im Bereich der variablen Wandung auftreten.

Das Wandungsende kann in Hauptströmungsrichtung des Strahltriebwerks an einem stromaufseitigen Ende und/oder einem stromabseitigen Ende der variablen Wandung angeordnet sein, wobei insbesondere die Anordnung an einem stromabseitigen Ende vorteilhaft ist.

Bei einer vorteilhaften Ausführung der Erfindung ist die Wandung des Mittelkörpers radial variabel ausgeführt, wobei insbesondere ein Bereich des Mittelkörpers variabel ausgeführt ist, der in einem sogenannten Mischbereich des Strahltriebwerks angeordnet ist, der sich stromab eines Vereinigungsbereichs eines Nebenstromkanals mit einem Kernstromkanal befindet.

Alternativ oder zusätzlich hierzu kann es auch vorgesehen sein, dass eine den Strömungskanal radial außen begrenzende äußere Wandung, insbesondere eine äußere Düsenwand, radial variabel ausgeführt ist, wobei in diesem Bereich auf einfache Weise große Änderungen eines Strömungsquerschnitts des Strömungskanals erzielbar sind. Aufgrund der hier niedrigeren Temperaturbelastung können entsprechend andere Materialien als beim Mittelkörper eingesetzt werden.

Grundsätzlich kann die radial variable Wandung jegliche Art von Strömungskanal eines Flugtriebwerks begrenzen. Als besonders zweckmäßig hat sich dabei die Ausgestaltung eines Strömungskanals einer Düse, insbesondere einer Überschalldüse, erwiesen.

Um eine genaue Einstellung des Strömungskanals vornehmen zu können, sind bei einer vorteilhaften Ausführung eines erfindungsgemäßen Strahltriebwerks zwei Verstelleinheiten vorgesehen, welche jeweils einem Kontrollquerschnitt der radial variablen Wandung zugeordnet sind. Durch eine entsprechende Betätigung der Verstelleinheiten ist hierbei eine voneinander unabhängige definierte Einstellung der radial variablen Wandung in dem jeweiligen Querschnittsbereich möglich.

Bei einer vorteilhaft einfachen Ausführung eines erfindungsgemäßen Strahltriebwerks ist wenigstens eine Verstelleinheit als insbesondere in axialer Richtung des Strahltriebwerks wirkende Zylinder-Kolben-Einheit ausgeführt.

Zum Zusammenwirken und Verbinden der wenigstens einen Verstelleinheit mit der variablen Wandung kann eine insbesondere zentral in dem Mittelkörper angeordnete, beispielsweise sternförmig ausgeführte Verbindungsstruktur vorgesehen sein. Die Verbindungsstruktur kann eine Vielzahl von beispielsweise als Metallstreifen ausgeführten, sternförmig angeordneten Verbindungselementen aufweisen, die in Umfangsrichtung verteilt einerseits mit der Verstelleinheit und andererseits mit der variablen Wandung verbunden sind.

Eine vorteilhafte gemeinsame Betätigung der Verstelleinheiten ist möglich, wenn die Verstelleinheiten miteinander gekoppelt sind. Beispielsweise kann vorgesehen sein, dass die Verstelleinheiten in axialer Richtung des Strahltriebwerks hintereinander angeordnet sind, wobei eine erste Verstelleinheit in einem Endbereich mit einem Gehäuse des Mittelkörpers verbunden ist und eine zweite Verstelleinheit in einem dem Endbereich der ersten Verstelleinheit abgewandten Endbereich mit der zweiten Verstelleinheit verbunden ist. Bei einer einfachen Gestaltung können die Verstelleinheiten z. B. als Zylinder-Kolben-Einheit ausgeführt sein.

Es ist auch möglich, dass die wenigstens eine Verstelleinheit an der eine variable Wandung bildenden äußeren Wandung angeordnet ist. Die Verstelleinheit kann dabei beispielsweise in der Art eines sogenannten Unison-Rings oder in der Art eines Blenden- bzw. Irismechanismus ausgeführt sein. Weiterhin kann die Verstelleinheit auch als Nockenwellenmechanismus ausgeführt sein. Zudem kann die Verstelleinheit vergleichbar zu einem Betätigungsmechanismus von verstellbaren Statorschaufeln ausgeführt sein, wobei durch eine Verlagerung einer Betätigungseinrichtung eine Veränderung der Wellenstruktur der variablen Wandung verursacht wird.

Gemäß der Erfindung weist die radial variable Wandung in Umfangsrichtung alternierend zueinander angeordnete konvexe Bereiche und konkave Bereiche auf, wobei die konvexen Bereiche und die konkaven Bereiche in einer Radialschnittebene sinusförmig ausgebildet sind. Bei einer Verlagerung der variablen Wandung ergeben sich dabei vorteilhaft geringe lokale Dehnungen des Materials der variablen Wandung, so dass die variable Wandung bei einer Verstellung nur gering belastet wird. Hierdurch sind große Querschnittsänderungen möglich und die variable Wandung weist eine vorteilhaft große Lebensdauer auf.

Die Wellenstruktur der variablen Wandung kann sich über die gesamte Länge der Wandung in Längsrichtung des Strahltriebwerks erstrecken. Je nach Anwendungsfall wird der Fachmann aber auch nur bestimmte Abschnitte der Wandung mit einer derartigen Wellenstruktur versehen.

Sowohl die in den Patentansprüchen angegebenen Merkmale als auch die in den nachfolgenden Ausführungsbeispielen des erfindungsgemäßen Strahltriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Strahltriebwerks ergeben sich aus den Patentansprüchen und aus den nachfolgend unter Bezugnahme auf die Zeichnung prinzipmäßig beschriebenen Ausführungsbeispielen, wobei in der Beschreibung der Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Strahltriebwerks mit einem Nebenstromkanal und einem Kernstromkanal, wobei der Nebenstromkanal und der Kernstromkanal in einem stromabseitigen Bereich zu einem Mischbereich zusammengeführt sind, der durch einen Mittelkörper und eine äußere Düsenwand begrenzt ist, und wobei der Mittelkörper mit einer radial variablen Wandung ausgeführt ist;
- Fig. 2: eine stark vereinfachte dreidimensionale Ansicht des Mischbereichs des Strahltriebwerks gemäß Fig. 1;
- Fig. 3: eine weitere stark vereinfachte dreidimensionale Ansicht des Mischbereichs des Strahltriebwerks gemäß Fig. 1;
- Fig. 4: eine vereinfachte Schnittansicht des Strahltriebwerks gemäß Fig. 1 im Mischbereich, wobei die Wandung in einem ersten Betriebszustand gezeigt ist;
- Fig. 5: eine Fig. 4 entsprechende Ansicht des Mischbereichs des Strahltriebwerks, wobei die Wandung in einem zweiten Betriebszustand gezeigt ist;
- Fig. 6: eine Fig. 4 und Fig. 5 entsprechende Ansicht des Mischbereichs des Strahltriebwerks, wobei die Wandung in einem dritten Betriebszustand gezeigt ist;
- Fig. 7: eine vereinfachte Ansicht eines Ausschnitts eines Mischbereichs eines alternativ ausgeführten Strahltriebwerks, wobei eine äußere Düsenwand radial variabel ausgeführt ist;
- Fig. 8: eine vereinfachte dreidimensionale Ansicht des Mischbereichs gemäß Fig. 7;
- Fig. 9: eine vereinfachte Ansicht des Mischbereichs gemäß Fig. 7;
- Fig. 10: eine der Fig. 9 entsprechende Ansicht des Mischbereichs mit einem alternativ ausgeführten Mittelkörper;
- Fig. 11: eine stark vereinfachte Schnittansicht des Mischbereichs gemäß Fig. 7 in einem ersten Querschnittsbereich XI-XI; und
- Fig. 12: eine stark vereinfachte Schnittansicht des Mischbereichs gemäß Fig. 8 in einem zweiten Querschnittsbereich XII-XII.

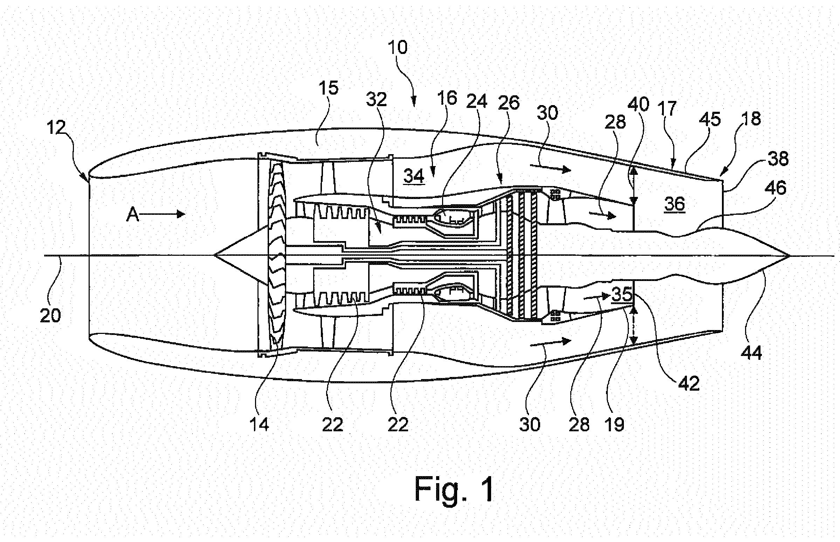

In Fig. 1 ist ein Strahltriebwerk bzw. Gasturbinentriebwerk 10 gezeigt, das in axialer Strömungsrichtung A einen Lufteinlass 12, einen Bläser 14, ein Kerntriebwerk 16 und eine Schubdüsenanordnung 18 umfasst, die alle um eine zentrale Achse 20 angeordnet und radial außen von einer äußere Gehäuseeinrichtung 15, einer sogenannte Triebwerksgondel bzw. Nacelle eingefasst sind. Die Abgasdüsenanordnung 18 umfasst eine äußere Düse 17 und eine radial innere Düse 19. Das Kerntriebwerk 16 weist in axialer Strömungsrichtung A hintereinander eine Reihe von Verdichtern 22, eine Brennkammer 24 und eine Reihe von Turbinen 26 auf.

Eine Hauptströmungsrichtung durch das Strahltriebwerk 10 im Betrieb ist durch den Pfeil A gekennzeichnet. Die Begriffe "stromaufwärts" und "stromabwärts" in der gesamten Beschreibung werden unter Bezugnahme auf diese allgemeine Strömungsrichtung A verwendet.

Luft wird im Betrieb des Strahltriebwerks 10 durch den Bläser 14 durch den Lufteinlass 12 angesaugt, beschleunigt und komprimiert. Stromab des Bläsers 14 wird die Luft in eine Kerntriebwerksströmung 28 und eine Bypass-Strömung aufgeteilt 30. Die durch das Kerntriebwerk 16 geführte Luft, strömt durch die Kerntriebwerksverdichter 22, in deren Bereich sie weiter komprimiert wird. Stromab der Verdichter 22 wird die Luft im Bereich der Brennkammer 24 mit Brennstoff vermischt, wobei dieses Gemisch innerhalb der Brennkammer 24 verbrannt wird.

Durch die Verbrennung des Kraftstoffs mit der komprimierten Luft tritt stromab der Brennkammern ein eine große Energie und Geschwindigkeit aufweisender Gasstrom aus, der stromabwärts durch die Turbinen 26 geführt wird. Die Turbinen 26 extrahieren durch Turbinenrotoren Energie aus dem Hochenergiegasstrom, wobei diese zum Antrieb des Bläsers 14 verwendet wird. Die Kompressoren 22 und der Bläser 14 sind mittels um die zentrale Achse 20 drehbar gelagerten Wellen 32 mit den Turbinenrotoren verbunden, und werden von diesen angetrieben. Stromab der Turbinen 26 wird der Gasstrom als Kernabgasstrom 28 durch einen Austrittsbereich 42 des Kerntriebwerks 16 in einen Mischbereich 36 geführt.

Die von dem Bläser 14 beschleunigte und durch einen Bypasskanal 34 bzw. Nebenstromkanal geführte Bypass-Strömung strömt in Strömungsrichtung A radial außerhalb des Kerntriebwerks 16. Der Bypasskanal 34 endet im Bereich einer Austrittsöffnung 40 und wird stromab der Austrittsöffnung 40 in dem Mischbereich 36 mit der Kerntriebwerksströmung 28 vermischt, und im Bereich einer Endaustrittsöffnung 38 aus dem Strahltriebwerk 10 ausgeleitet, um einen gewünschten Vortriebsschub zu liefern.

Die Schubdüsenanordnung 18 weist einen Mittelkörper 44 auf, der radial innerhalb der inneren Düse 19 angeordnet ist. Der Mittelkörper 44 definiert bereichsweise radial innenseitig einen Kernstromkanal 35, durch den die Kerntriebwerksströmung 28 geführt wird. Die innere Düse 19 und die äußere Düse 17 definieren den Bypasskanal 34 für die Bypass-Strömung 30. Die äußere Düse 17 erstreckt sich stromabwärts von der inneren Düse 19, wobei durch eine äußere Düsenwand 45 und eine Wandung 46 des Mittelkörpers 44 der Mischbereich bzw. Mischkanal 36 definiert ist. Sowohl die Kerngasströmung 28 als auch die Bypass-Strömung 30 werden in den Mischbereich 36 eingeleitet. Im Bereich der Endaustrittsöffnung 38 weist der Mischbereich 36 sowohl einen divergenten als auch einen konvergenten Bereich auf.

Das Strahltriebwerk 10 durchläuft während eines klassischen Flugzyklus verschiedene Betriebszustände, die einen Start, einen Steigflug, einen Reiseflug, einen Sinkflug und eine Landung umfassen. Zusätzlich kann auch einen Wartebetrieb vor einem Start vorliegen. Bei einem Start eines Flugzeugs wird das Strahltriebwerk 10 bei voller Leistung und während eines Steigflugs, während dessen das Flugzeug auf Reiseflughöhe steigt, bei nahezu voller Leistung betrieben. Während des Reiseflugs arbeitet das Strahltriebwerk 10 in der Regel mit etwa 70% bis 80% seiner maximalen Leistung. Während eines Sinkflugs wird eine Leistung des Strahltriebwerks 10 auf etwa 10% bis 20% der maximalen Leistung reduziert.

Um das Strahltriebwerk 10 in sämtlichen Betriebszuständen möglichst effektiv betreiben zu können, ist ein freier Strömungsquerschnitt in dem Mischbereich 36 variierbar ausgeführt.

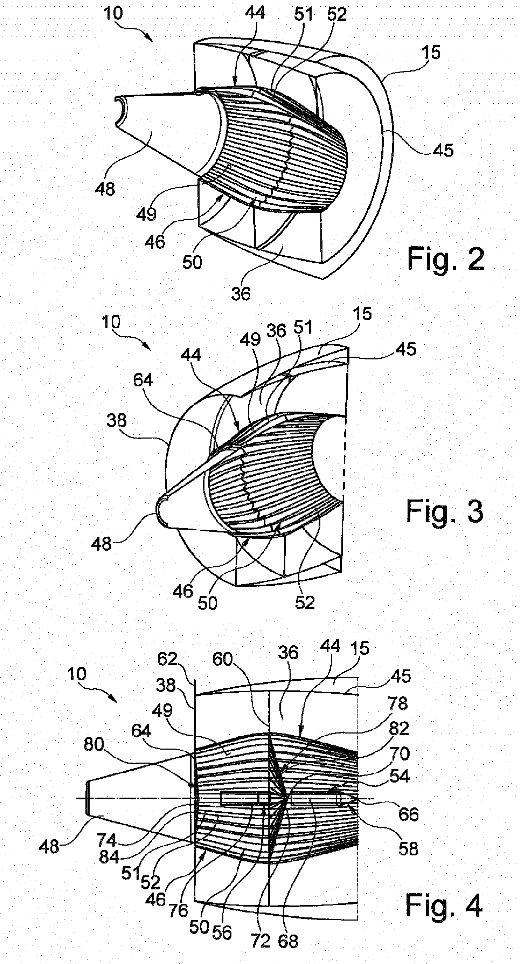

Hierzu ist eine in Fig. 2 bis Fig. 6 näher ersichtliche Wandung 46 des Mittelkörpers 44, die sich beispielsweise ausgehend von der Austrittsöffnung 40 des Bypasskanals 34 und dem Austrittsbereich 42 des Kernstromkanals 35 in Strömungsrichtung A vorliegend bis zu einer Kernverkleidung 48 erstreckt, mit einem in radialer Richtung R variierbaren Querschnitt ausgeführt. Durch eine Veränderung des von der Wandung 46 eingeschlossenen Querschnitts ist auch ein Strömungsquerschnitt des Mischbereichs 36 veränderbar.

Die elastisch ausgeführte Wandung 46 weist vorliegend eine in Richtung des Mischbereichs 36 geschlossene Oberfläche 49 und eine in Umfangsrichtung U durchgängige Wellenstruktur 50 auf, die durch alternierend zueinander angeordnete konvexe Bereich 51 und konkave Bereiche 52 gebildet ist. Die konvexen Bereiche 51 und die konkaven Bereiche 52 sind vorliegend in einer Radialschnittebene sinusförmig ausgebildet, wobei die konvexen Bereiche 51 und die konkaven Bereiche 52 jeweils in Strömungsrichtung A im Wesentlichen geradlinig verlaufen.

Zur Betätigung, d. h. zum Aufweiten und Zusammenziehen der variablen Wandung 46 sind vorliegend zwei jeweils als Zylinder-Kolben-Einheiten 54, 56 ausgeführte und miteinander gekoppelten Verstelleinheiten einer Verstelleinrichtung 58 vorgesehen, wobei die erste Zylinder-Kolben-Einheit 54 zur Variation eines Querschnitts der Wandung 46 im Bereich eines ersten Kontrollquerschnitts 60, und die zweite Zylinder-Kolben-Einheit 56 zur Variation eines Querschnitts der Wandung 46 im Bereich eines zweiten Kontrollquerschnitts 62 ausgeführt ist. Die Zylinder-Kolben-Einheiten 54, 56 erstrecken sich in einem in radialer Richtung R des Strahltriebwerks 10 mittigen Bereich entlang der zentralen Achse 20.

Der erste Kontrollquerschnitt 60 befindet sich vorliegend in dem Bereich des Mischbereichs 36, in dem der durch den Mischbereich 36 gebildete Strömungskanal einen minimalen Querschnitt aufweist bzw. der einen sogenannten Throat-Bereich darstellt. Der zweite Kontrollquerschnitt 62 befindet sich vorliegend in einem stromabseitigen Endbereich 64 der Wandung 46, an den sich vorliegend in Strömungsrichtung A die Kernverkleidung 48 anschließt.

Die erste Zylinder-Kolben-Einheit 54 ist mit einem stromaufseitigen Endbereich 66 gehäusefest festgelegt, wobei ein Kolben 68 der ersten Zylinder-Kolben-Einheit 54 an einem stromabseitigen Endbereich 70 mit einem stromaufseitigen Endbereich 72 der zweiten Zylinder-Kolben-Einheit 56 verbunden ist. Hierdurch wird die zweite Zylinder-Kolben-Einheit 56 bei einer Verlagerung des Kolbens 68 der ersten Zylinder-Kolben-Einheit 54 verlagert. Ein stromabseitiger Endbereich 74 der zweiten Zylinder-Kolben-Einheit 56 ist wiederum über einen Kolben 76 der zweiten Zylinder-Kolben-Einheit 56 verlagerbar ausgeführt.

Der ersten Zylinder-Kolben-Einheit 54 ist eine Verbindungsstruktur 78 zugeordnet, die durch eine Vielzahl von umfangsseitig verteilt angeordneten Stangenelementen bzw. Metallstreifen 82 gebildet ist. Die sternförmig angeordneten Metallstreifen 82 sind dabei jeweils in dem stromabseitigen Endbereich 70 der ersten Zylinder-Kolben-Einheit 54 mit dem Kolben 68 verbunden und erstrecken sich von diesem jeweils in radialer Richtung R nach außen zu der Wandung 46. Die Metallstreifen 82 sind hierbei jeweils im ersten Kontrollquerschnitt 60 fest mit einem konkaven Bereich 52 der Wandung 46 verbunden, wobei vorliegend jedem konkaven Bereich 52 ein Metallstreifen 82 zugeordnet ist.

Vergleichbar zu der Verbindungsstruktur 78 ist auch der zweiten Zylinder-Kolben-Einheit 56 eine Verbindungsstruktur 80 zugeordnet, die wiederum mit einer Vielzahl von z. B. stangenartigen Metallstreifen 84 ausgeführt ist. Die Metallstreifen 84 sind einerseits in dem stromabseitigen Endbereich 74 der zweiten Zylinder-Kolben-Einheit 56 mit dem Kolben 76 verbunden und erstrecken sich von diesem ausgehend in radialer Richtung R zu der Wandung 46 und sind mit dieser mit den konkaven Bereichen 52 im zweiten Kontrollquerschnitt 62 fest verbunden. Hierbei ist wiederum insbesondere jedem konkaven Bereich 52 ein Metallstreifen 84 zugeordnet.

Durch eine Verlagerung des jeweiligen Anbindungspunktes der Metallstreifen 82 an der ersten Zylinder-Kolben-Einheit 54 oder der Metallstreifen 84 an der zweiten Zylinder-Kolben-Einheit 56 ist ein Abstand der konkaven Bereiche 52 von der zentralen Achse 20 in dem jeweiligen Kontrollquerschnitt 60, 62 einstellbar, wobei eine Verlagerung des jeweiligen Kolbens 68, 76 vorliegend zu einer achssymmetrischen Verformung bzw. zu einem Ausbauchen der variablen Wandung 46 mit einer Reduzierung einer Höhe der Wellenstruktur 50 führt. Die konvexen Bereiche 51 werden dabei in Abhängigkeit des Materials der Wandung 46 und dessen Biegeverhalten entsprechend verformt, wobei die Wellenstruktur 50 bei einer Vergrößerung eines Abstands der konkaven Bereiche 52 von der zentralen Achse 20 in eine kreisförmigere Form überführt wird. Hierbei ist auch ein Abstand der konvexen Bereiche 51 von der zentralen Achse 20 maximal vergrößerbar.

Durch eine Verlagerung der jeweiligen Zylinder-Kolben-Einheit 54, 56 ist eine Querschnittsfläche der variablen Wandung 46 in dem jeweiligen Kontrollquerschnitt 60, 62 variierbar, wobei hierdurch entsprechend ein Strömungsquerschnitt in dem Mischbereich 36 variiert wird. Eine Vergrößerung der Querschnittsfläche der Wandung 46 in dem jeweiligen Kontrollquerschnitt 60, 62 führt dabei zu einer Verkleinerung des Strömungsquerschnitts des Mischbereichs 36 im jeweiligen Kontrollquerschnitt 60, 62 und umgekehrt. Ein Verlauf eines Strömungsquerschnitts in dem Mischbereich 36 ist dabei durch die Verstelleinrichtung 58 vorteilhaft genau einstellbar.

In Fig. 2 bis Fig. 4 ist ein erster Betriebszustand der Wandung 46 gezeigt, bei dem eine Leistung des Strahltriebwerks 10 maximal ist und der insbesondere bei einem Start eines Flugzeugs vorliegt. Der Kolben 68 der ersten Zylinder-Kolben-Einheit 54 befindet sich hierbei in einer maximal eingefahrenen Endposition. Hierdurch ist ein Abstand zwischen den konkaven Bereichen 51 und der zentralen Achse 20 in dem ersten Kontrollquerschnitt 60 minimiert, so dass der Strömungsquerschnitt des Mischbereichs 36 im ersten Kontrollquerschnitt 60 maximal ist. Der Kolben 76 der zweiten Zylinder-Kolben-Einheit 54 befindet sich in einer maximal ausgefahrenen Stellung, so dass der stromabseitige Endbereich 74 der zweiten Zylinder-Kolben-Einheit 56 sich im Wesentlichen im Bereich des zweiten Kontrollquerschnitts 62 befindet und auch die Stangenelemente bzw. Metallstreifen 84 im Wesentlichen in einer durch den zweiten Kontrollquerschnitt 62 definierten Ebene liegen. Ein Abstand zwischen den konkaven Bereichen 52 und der zentralen Achse 20 ist hierbei in dem zweiten Kontrollquerschnitt 62 maximal, wodurch wiederum ein Strömungsquerschnitt des Mischbereichs 36 in dem zweiten Kontrollquerschnitt 62 minimal ist.

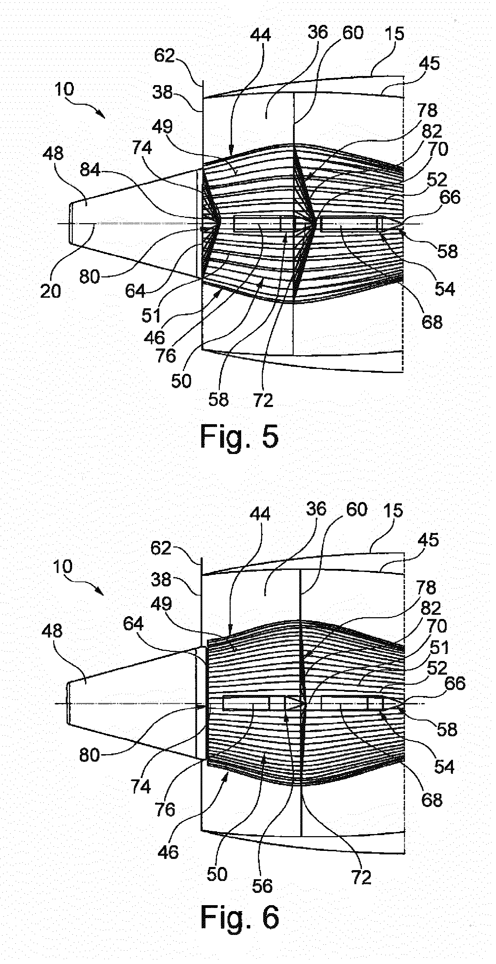

Ein zweiter Betriebszustand der Wandung 46 ist in Fig. 5 gezeigt, der insbesondere während eines Steigflugs eines Flugzeugs vorliegt. Der Kolben 68 der ersten Zylinder-Kolben-Einheit 54 befindet sich hierbei in einer mittleren Position zwischen einer maximal eingefahrenen und einer maximal ausgefahrenen Endposition, so dass ein Strömungsquerschnitt des Mischbereichs 36 in dem ersten Kontrollquerschnitt 60 eine Größe aufweist, die ebenfalls zwischen einer maximalen Größe und einer minimalen Größe des Strömungsquerschnitts liegt. Der Kolben 76 der zweiten Zylinder-Kolben-Einheit 54 befindet sich in einer maximal eingefahrenen Stellung, so dass ein Abstand zwischen den konkaven Bereichen 52 und der zentralen Achse 20 in dem zweiten Kontrollquerschnitt 62 minimal ist. Der Strömungsquerschnitt des Mischbereichs 36 in dem zweiten Kontrollquerschnitt 62 nimmt hierdurch einen maximalen Wert an.

In Fig. 6 ist ein dritter Betriebszustand der Wandung 46 gezeigt, der bei einem Reiseflug und insbesondere in einem Überschallbetrieb vorliegt. Sowohl der Kolben 68 der ersten Zylinder-Kolben-Einheit 54 als auch der Kolben 76 der zweiten Zylinder-Kolben-Einheit 54 befinden sich hierbei in einer maximal ausgefahrenen Endposition, so dass sich der jeweilige stromabseitige Endbereich 70, 74 der Zylinder-Kolben-Einheiten 54, 56 im Wesentlichen im Bereich einer durch den jeweiligen Kontrollquerschnitt 60, 62 definierten Ebene befindet und der Strömungsquerschnitt des Mischbereichs 36 in dem ersten Kontrollquerschnitt 60 und in dem zweiten Kontrollquerschnitt 62 minimal ist.

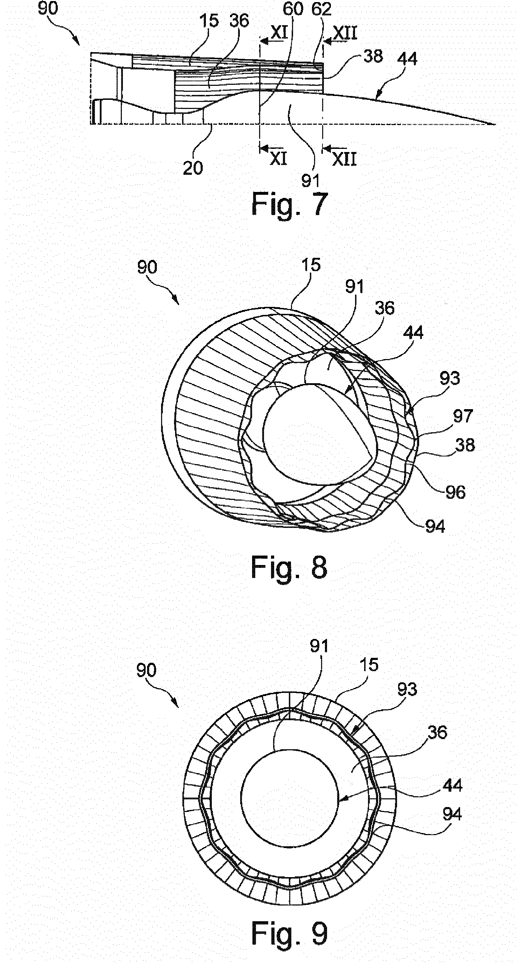

In Fig. 7 bis Fig. 12 sind Ausführungsalternativen für ein Strahltriebwerk 90 gezeigt, das im Wesentlichen vergleichbar zu dem Strahltriebwerk 10 ausgeführt ist. Im Folgenden wird daher lediglich auf die Unterschiede zwischen dem Strahltriebwerk 90 und dem Strahltriebwerk 10 eingegangen und ansonsten auf die Ausführungen zu dem Strahltriebwerk 10 verwiesen.

Bei dem Strahltriebwerk 90 ist eine Wandung 91 des Mittelkörpers 44 nicht flexibel sondern starr ausgeführt, wobei die Wandung 91 in Umfangsrichtung U einen kreisförmigen Querschnitt aufweist.

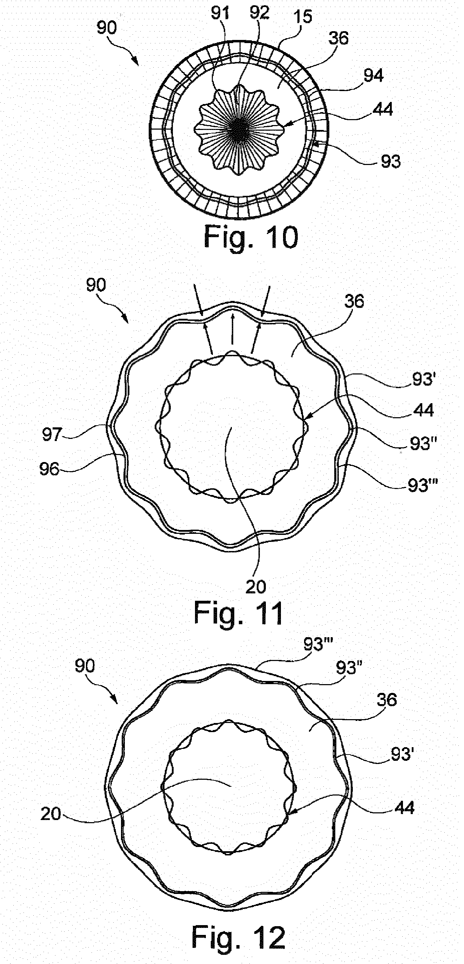

Bei der Ausführung gemäß Fig. 10 ist die Wandung 91 des Mittelkörpers 44 ebenfalls starr ausgeführt, weist aber eine Wellenstruktur 92 auf, die vergleichbar zu der Wellenstruktur 50 der Wandung 46 mit konkaven Bereichen 52 und konvexen Bereichen 51 ausgebildet ist. Die Form der Wandung 91 wird dabei insbesondere hinsichtlich der Strömungs- und/oder Lärmanforderungen gewählt.

Bei der Ausführung des Strahltriebwerks 90 gemäß Fig. 7 bis Fig. 12 ist eine den Mischbereich 36 in radialer Richtung R außen begrenzende äußere Düsenwandung 93 als radial flexible Wandung mit einer Wellenstruktur 94 ausgeführt. Die Wellenstruktur 94 ist dabei vergleichbar zu der Wellenstruktur 50 ausgeführt, wobei ein von der äußeren Düsenwandung 93 begrenzter Strömungsquerschnitt des Mischbereichs 36 vergleichbar zu der Ausführung des Strahltriebwerks 10 variierbar ist. Hierzu ist wiederum eine nicht näher ersichtliche Verstelleinrichtung vorgesehen, die mit zwei Verstelleinheiten ausgeführt sein kann, so dass mittels der Verstelleinrichtung ein Strömungsquerschnitt des Mischbereichs 36 insbesondere in den Kontrollquerschnitten 60, 62 variierbar ist.

Im Vergleich zu der radial flexiblen Wandung 46 sind mit der radial flexiblen äußeren Düsenwandung 93 größere Änderungen eines Strömungsquerschnitts des Mischbereichs 36 mit vergleichsweise geringen Biegungen der äußeren Düsenwandung 93 im Bereich von konkaven Bereichen 96 und konvexen Bereichen 97 erzielbar.

In Fig. 11 und Fig. 12 ist die äußere Düsenwandung 93 in verschiedenen Betriebszuständen gezeigt, wobei die Düsenwandung 93 in Fig. 11 in dem ersten Kontrollquerschnitt 60 und in Fig. 12 in dem zweiten Kontrollquerschnitt gezeigt ist. Mit 93' ist die Wandung dabei in einem Überschallbetrieb des Strahltriebwerks 90 mit maximaler Leistung und z. B. 1,2 Ma, mit 93" in einem transsonischen Bereich bei z. B. 0,95 Ma und mit 93" bei einem Start (MTO) gezeigt.

Die zur Verlagerung der elastisch ausgeführten, radial flexiblen äußeren Düsenwandung 93 vorgesehene Verstelleinrichtung ist vorzugsweise in einem Zwischenraum zwischen der äußeren Düsenwandung 93 und der Triebwerksgondel 15 angeordnet. Die Verstelleinheiten der Verstelleinrichtung können dabei in Abhängigkeit des jeweils vorliegenden Bauraums ausgeführt sein.

### Bezugszeichenliste

- 10: Strahltriebwerk
- 12: Lufteinlass
- 14: Bläser
- 15: Gehäuseeinrichtung; Triebwerksgondel
- 16: Kerntriebwerk
- 17: äußere Düse
- 18: Schubdüsenanordnung
- 19: innere Düse
- 20: zentrale Achse
- 22: Verdichter
- 24: Brennkammer
- 26: Turbine
- 28: Kerntriebwerksströmung
- 30: Bypass-Strömung
- 32: Welle
- 34: Bypasskanal
- 35: Kernstromkanal
- 36: Mischbereich
- 38: Endaustrittsöffnung
- 40: Austrittsöffnung
- 42: Austrittsbereich
- 44: Mittelkörper
- 45: äußere Düsenwand
- 46: Wandung
- 48: Kernverkleidung
- 49: Oberfläche
- 50: Wellenstruktur
- 51: konvexer Bereich
- 52: konkaver Bereich
- 54: erste Verstelleinheit; erste Zylinder-Kolben-Einheit
- 56: zweite Verstelleinheit; zweite Zylinder-Kolben-Einheit
- 58: Verstelleinrichtung
- 60: erster Kontrollquerschnitt
- 62: zweiter Kontrollquerschnitt
- 64: stromabseitier Endbereich der Wandung
- 66: stromaufseitiger Endbereich der ersten Zylinder-Kolben-Einheit
- 68: Kolben der ersten Zylinder-Kolben-Einheit
- 70: stromabseitiger Endbereich der ersten Zylinder-Kolben-Einheit
- 72: stromaufseitiger Endbereich der zweiten Zylinder-Kolben-Einheit
- 74: stromabseitiger Endbereich der zweiten Zylinder-Kolben-Einheit
- 76: Kolben der zweiten Zylinder-Kolben-Einheit
- 78, 80: Verbindungsstruktur
- 82, 84: Stangenelement
- 90: Strahltriebwerk
- 91: Wandung des Mittelkörpers
- 92: Wellenstruktur des Mittelkörpers
- 93: flexible Wandung; äußere Düsenwand
- 94: Wellenstruktur
- 96: konkaver Bereich
- 97: konvexer Bereich
- A: Strömungsrichtung
- R: radiale Richtung des Strahltriebwerks
- U: Umfangsrichtung des Strahltriebwerks

## Patentansprüche

1. Strahltriebwerk (10; 90) mit einem in einer Triebwerksgondel (15) angeordneten Strömungskanal (36), welcher radial innen von einem Mittelkörper (44) und radial außen von einer äußeren Düsenwand (45; 93) begrenzt ist, wobei der freie Querschnitt des Strömungskanals (36) durch eine elastisch ausgeführte, radial variable Wandung (46; 93) wenigstens eines dieser Bauteile (44; 45) veränderbar ist, und wobei die radial variable Wandung (46; 93) zumindest bereichsweise eine wenigstens annähernd wellenartige Struktur (50; 94) mit in Umfangsrichtung (U) alternierend zueinander angeordneten konvexen Bereichen (51 ; 97) und konkaven Bereiche (52; 96) aufweist, wobei die konvexen Bereiche (51 ; 97) und die konkaven Bereiche (52; 96) in einer Radialschnittebene sinusförmig ausgebildet sind, und mit wenigstens einer eine Verstelleinheit (54, 56) aufweisenden Versteileinrichtung (58) verbunden ist,
**dadurch gekennzeichnet,**
**dass** die variable Wandung (46; 93) eines dieser Bauteile (44; 45) an zwei definierten, axial beabstandeten Wandungsquerschnitten (60, 62), von denen wenigstens einer ein axiales Wandungsende (64) der radial variablen Wandung (46; 93) definiert, in radialer Richtung (R) veränderbar ist, wobei eine Verbindungsstruktur (78, 80) zur Verbindung der wenigstens einen Verstelleinheit (54, 56) mit der variablen Wandung (46) vorgesehen ist und wobei die Verbindungsstruktur (78, 80) eine Vielzahl von umfangsseitig verteilt angeordneten Stangenelementen (82, 84) aufweist, die jeweils fest mit einem der konkaven Bereiche (52; 96) der Wandung verbunden sind.

2. Strahltriebwerk nach Anspruch 1, **dadurch gekennzeichnet, dass** das Wandungsende (64) der variablen Wandung (46; 93) in Hauptströmungsrichtung (A) des Strahltriebwerks (10) ein stromaufseitiges Ende oder ein stromabseitiges Ende (64) darstellt.

3. Strahltriebwerk nach einem der Ansprüche 1 oder 2, **dadurch gekennzeichnet, dass** ein Wandungsquerschnitt (60) in einem Bereich der variablen Wandung (46; 93) angeordnet ist, in dem ein Strömungsquerschnitt des Strömungskanals (36) minimal ist.

4. Strahltriebwerk nach einem der Ansprüche 1 bis 3, **dadurch gekennzeichnet, dass** die Wandung (46) des Mittelkörpers (44) radial variabel ausgeführt ist.

5. Strahltriebwerk nach einem der Ansprüche 1 bis 4, **dadurch gekennzeichnet, dass** eine den Strömungskanal (36) radial außen begrenzende äußere Wandung (45; 93) radial variabel ausgeführt ist.

6. Strahltriebwerk nach einem der Ansprüche 1 bis 5, **dadurch gekennzeichnet, dass** zwei Verstelleinheiten (54, 56) vorgesehen sind, welche jeweils einem Wandungsquerschnitt (60, 62) der radial variablen Wandung (46; 93) zugeordnet sind.

7. Strahltriebwerk nach einem der Ansprüche 1 bis 6, **dadurch gekennzeichnet, dass** wenigstens eine Verstelleinheit (54, 56) als Zylinder-Kolben-Einheit ausgeführt und in dem Mittelkörper (44) angeordnet ist.

8. Strahltriebwerk nach einem der Ansprüche 1 bis 7, **dadurch gekennzeichnet, dass** die Verstelleinheiten (54, 56) miteinander gekoppelt sind.

9. Strahltriebwerk nach einem der Ansprüche 1 bis 8, **dadurch gekennzeichnet, dass** wenigstens eine Verstelleinheit an der äußeren Wandung (45; 93) angeordnet ist.

## Claims

1. Jet engine (10; 90) having a flow duct (36) that is arranged in an engine nacelle (15) and is delimited radially on the inside by a central body (44) and radially on the outside by an outer nozzle wall (45; 93), the free cross section of the flow duct (36) being variable by an elastically embodied, radially variable wall (46; 93) of at least one of these components (44; 45), and the radially variable wall (46; 93) at least regionally having an at least approximately wavelike structure (50; 94) with convex regions (51; 97) and concave regions (52; 96) that are arranged alternately with one another in the circumferential direction (U), the convex regions (51; 97) and the concave regions (52; 96) being formed in a sinusoidal manner in a radial section plane, and being connected to at least one adjusting device (58) having an adjusting unit (54, 56), **characterized in that** the variable wall (46; 93) of one of these components (44; 45) is variable in a radial direction (R) at two defined, axially spaced apart wall cross sections (60, 62), at least one of which defines an axial wall end (64) of the radially variable wall (46; 93), a connecting structure (78, 80) for connecting the at least one adjusting unit (54, 56) to the variable wall (46) being provided, and the connecting structure (78, 80) having a multiplicity of bar elements (82, 84) that are arranged in a circumferentially distributed manner and are each connected firmly to one of the concave regions (52; 96)of the wall.

2. Jet engine according to Claim 1, **characterized in that** the wall end (64) of the variable wall (46; 93) represents an upstream end or a downstream end (64) in the main direction of flow (A) of the jet engine (10).

3. Jet engine according to either of Claims 1 and 2, **characterized in that** a wall cross section (60) is arranged in a region of the variable wall (46; 93) in which a flow cross section of the flow duct (36) is at a minimum.

4. Jet engine according to one of Claims 1 to 3, **characterized in that** the wall (46) of the central body (44) is embodied in a radially variable manner.

5. Jet engine according to one of Claims 1 to 4, **characterized in that** an outer wall (45; 93) that delimits the flow duct (36) radially on the outside is embodied in a radially variable manner.

6. Jet engine according to one of Claims 1 to 5, **characterized in that** two adjusting units (54, 56) are provided, which are each assigned to a wall cross section (60, 62) of the radially variable wall (46; 93).

7. Jet engine according to one of Claims 1 to 6, **characterized in that** at least one adjusting unit (54, 56) is embodied as a cylinder/piston unit and arranged in the central body (44).

8. Jet engine according to one of Claims 1 to 7, **characterized in that** the adjusting units (54, 56) are coupled together.

9. Jet engine according to one of Claims 1 to 8, **characterized in that** at least one adjusting unit is arranged on the outer wall (45; 93).

## Revendications

1. Moteur à réaction (10 ; 90) comprenant un canal d'écoulement (36) agencé dans une nacelle de moteur (15), qui est délimité radialement à l'intérieur par un corps central (44) et radialement à l'extérieur par une paroi de buse extérieure (45 ; 93), la section transversale libre du canal d'écoulement (36) pouvant être modifiée par une paroi (46 ; 93) variable radialement, réalisée sous forme élastique, d'au moins un de ces composants (44 ; 45), et la paroi variable radialement (46 ; 93) présentant au moins par zones une structure (50 ; 94) au moins approximativement ondulée avec des zones convexes (51 ; 97) et des zones concaves (52 ; 96) agencées en alternance les unes des autres dans la direction périphérique (U), les zones convexes (51 ; 97) et les zones concaves (52 ; 96) étant configurées sous forme sinusoïdale dans un plan de coupe radial, et étant reliée à au moins un appareil de réglage (58) présentant une unité de réglage (54, 56),
**caractérisé en ce que**
la paroi variable (46 ; 93) de l'un de ces composants (44 ; 45) peut être modifiée dans la direction radiale (R) au niveau de deux sections transversales de paroi (60, 62) définies, espacées axialement, dont l'une au moins définit une extrémité de paroi axiale (64) de la paroi variable radialement (46 ; 93), une structure de liaison (78, 80) étant prévue pour relier l'au moins une unité de réglage (54, 56) à la paroi variable (46) et la structure de liaison (78, 80) présentant une pluralité d'éléments de tige (82, 84) agencés de manière répartie sur la périphérie, qui sont reliés respectivement de manière fixe à l'une des zones concaves (52 ; 96) de la paroi.

2. Moteur à réaction selon la revendication 1, **caractérisé en ce que** l'extrémité de paroi (64) de la paroi variable (46 ; 93) constitue, dans la direction d'écoulement principale (A) du moteur à réaction (10), une extrémité amont ou une extrémité aval (64).

3. Moteur à réaction selon l'une quelconque des revendications 1 ou 2, **caractérisé en ce qu'**une section transversale de paroi (60) est agencée dans une zone de la paroi variable (46 ; 93) dans laquelle une section transversale d'écoulement du canal d'écoulement (36) est minimale.

4. Moteur à réaction selon l'une quelconque des revendications 1 à 3, **caractérisé en ce que** la paroi (46) du corps central (44) est réalisée sous forme variable radialement.

5. Moteur à réaction selon l'une quelconque des revendications 1 à 4, **caractérisé en ce qu'**une paroi extérieure (45 ; 93) délimitant radialement à l'extérieur le canal d'écoulement (36) est réalisée de manière variable radialement.

6. Moteur à réaction selon l'une quelconque des revendications 1 à 5, **caractérisé en ce que** deux unités de réglage (54, 56) sont prévues, qui sont associées respectivement à une section transversale de paroi (60, 62) de la paroi variable radialement (46 ; 93).

7. Moteur à réaction selon l'une quelconque des revendications 1 à 6, **caractérisé en ce qu'**au moins une unité de réglage (54, 56) est réalisée sous forme d'unité cylindre-piston et est agencée dans le corps central (44) .

8. Moteur à réaction selon l'une quelconque des revendications 1 à 7, **caractérisé en ce que** les unités de réglage (54, 56) sont couplées entre elles.

9. Moteur à réaction selon l'une quelconque des revendications 1 à 8, **caractérisé en ce qu'**au moins une unité de réglage est agencée sur la paroi extérieure (45 ; 93).
